# EUROPEAN PATENT SPECIFICATION

(11) **EP 2 483 960 B1**
(45) Date of publication and mention of the grant of the patent: **16.12.2015**
(21) Application number: 10819961.3
(22) Date of filing: 01.10.2010
(51) Int. Cl.: H01M 8/04, H01M 8/06

(54) **METHOD AND SYSTEM FOR MAINTAINING PURITY OF ANODE OR CATHODE GAS IN A FUEL CELL**
VERFAHREN UND SYSTEM ZUR AUFRECHTERHALTUNG DER REINHEIT EINES ANODEN- ODER KATHODENGASES IN EINER BRENNSTOFFZELLE
PROCÉDÉ ET SYSTÈME DE MAINTIEN DE PURETÉ DE GAZ D'ANODE OU DE CATHODE DANS UNE PILE À COMBUSTIBLE

(30) Priority: 02.10.2009 FI 20096010
(43) Date of publication of application: 08.08.2012
(73) Proprietor: Teknologian tutkimuskeskus VTT Oy, 02150 Espoo (FI)
(72) Inventor: IHONEN, Jari, FIN-02044 VTT (FI)
(74) Representative: Seppo Laine Oy
(86) International application number: PCT/FI2010/050761
(87) International publication number: WO 2011/039421

(56) References cited:
- WO-A1-2006/019197
- JP-A- 2005 243 357
- JP-A- 2007 109 555
- JP-A- 2007 173 060
- JP-A- 2008 023 497
- JP-A- 2008 171 715
- US-A1- 2006 096 456
- US-A1- 2008 268 313

## Description

The present invention relates to fuel cells, particularly to closed-end hydrogen fuel cells. The invention relates especially to the removal of impurities from a cell, according to the preambles of the independent Claims.

In a closed-end hydrogen fuel cell, the aim is the highest possible fuel utilization. At the present moment, a problem with such fuel cells is a too short operating life.

The present invention is based on a new problem relating to the collection of impurities observed in closed-end fuel cells and the consequent shortening of their operating life. Previously, attempts have been made to lengthen the operating life of fuel cells by increasing the degree of cleanliness of the feed hydrogen, but this increases the costs of manufacturing and distributing the hydrogen.

If nearly one-hundred-percent feed hydrogen is used in a closed-end fuel cell, the inert gases and impurities (for instance, H₂S, SO₂, NOₓ, VOC, i.e. di-hydrogen sulphide, sulphur dioxide, nitrogen oxides, and organic hydrocarbons, as well as possibly other impurities detrimental to the cell) in the feed hydrogen become enriched in the gas space of the anode. If there are few inert gases, and the nitrogen flow coming from the cathode side is low, the inert gases will need to be removed very seldom from the anode gas space. In that case, the impurities in the feed hydrogen can increase to become tens or hundreds of times greater than in the feed gas. Even small impurities in the feed gas will then have an effect on the operating life of the cell. A particularly important problem arises when an attempt is made to utilize the feed hydrogen maximally in the fuel cell, i.e. to maximize the fuel cell's fuel efficiency. According to our present knowledge, the problem in question, i.e. the powerful enrichment of the impurities, has not yet been acknowledged. Similar phenomena can also be detected to some extent on the cathode side of a cell.

US publication 6517963 discloses one solution for filtering the fuel of a fuel cell. In the solution, a regenerative filter is used, which is located on the gas feed line, i.e. the cleaning is performed before the gas is fed into the cell, i.e. it thus corresponds to the otherwise known idea of increasing the purity of the feed hydrogen. The solution is suitable neither for cleaning a fuel cell that has already become contaminated, particularly with a small amount of gas, nor for preventing the enrichment of impurities in a fuel cell.

In WO2006/019197 is disclosed a fuel cell system, where a replacement time of used fuel and a filter is notified to a user, by detecting a degree of consumption of the fuel and a degree of impurity.

In JP2005 243357 is shown a fuel cell system provided with a gas circulating system having a water-repellent filter for removing moisture from the system.

In US2008/268313 is disclosed a fuel cell device having with a gas-purifying filter arranged in its circulation system. A catalyst section decontaminates the gas component in an exhaust.

The present invention provides an improved method and system for maintaining purity of anode or cathode gas in a fuel cell. According to one embodiment of the invention, a filter is added to a circulation line of the anode side of the fuel cell. The filter is intended to remove enriched impurities from the anode gas circulation, and thus to keep the impurity contents minimal considerably more cost-effectively than with the aid of known solutions, such as, for example, increasing the degree of cleanliness of the feed hydrogen. The filter can be located in parallel with the anode, or on a closed (loop-type) bypass feed line connected to the anode circulation.

According to one embodiment, the system according to the invention for reducing impurities comprises a fuel-cell anode, a fuel feed line for feeding fuel to the anode, and a circulation line connected to the fuel feed line, for circulating part of the fuel along it, preferably bypassing the fuel-cell anode, or as a closed circulation connected to the anode circulation, preferably on the exit side of the anode. According to the invention, at least one filter is arranged on the fuel circulation line, in order to remove fuel impurities.

According to one embodiment, the filter can be regenerated.

Instead of, or in addition to the fuel cell's anode side, the system according to the invention can be correspondingly applied on the cathode side, as will be described later in greater detail.

The method according to the invention relates to arranging an anode or cathode circulation in a hydrogen fuel cell. Applied to the anode side, in the method the fuel is fed to the fuel cell's anode, part of the fuel is circulated along the circulation line, in such a way that on the circulation line at least part of the fuel's impurities are filtered out of the circulation.

According to a preferred embodiment, in order to filter the impurities a regenerating filter is used, which is regenerated at desired intervals, for example by heating, and the impurities detaching from the filter during regeneration are removed from the circulation.

More specifically, the system and method according to the invention are characterized by what is stated in the independent Claims 1 and 14. A fuel cell and vehicle comprising the system according to Claim 1 are defined in Claims 17 and 18.

With the aid of the invention, the circulation's enriched impurities can be removed, in order to prolong the operating life of the fuel cell. The invention's advantage is simplicity and thus the cost-effective removal of impurities. Using traditional removal methods for undesirable substances, such as water and nitrogen, it is not possible to effectively remove certain impurities, such as odorous gases, hydrogen sulphide, oxides, or organic compounds (e.g., H₂S, SO₂, NOₓ, and VOC). These compounds typically collect in the anode's gas space and can enrich to very high contents, collect in the cell, and reduce its efficiency. However, the continuously-operating filtering using a bypass circulation system presented here keeps the amount of impurities less during the entire duration of the operation of the fuel cell. The implementation costs of the present invention are extremely low.

The present invention is typically applied in a hydrogen fuel cell, preferably in a closed-end hydrogen fuel cell, but it can also be used in fuel cells using other fuels, in order to remove impurities essentially continuously. Most advantageously, the method and system are applied to clean the anode gas in a closed-end hydrogen fuel cell.

In should be noted, that any fuel cell whatever can be used as a closed-end cell if necessary. Thus, the invention also encompasses fuel cells that are originally of other types, which are, if necessary, be used in a manner similar to that of a closed-end cell.

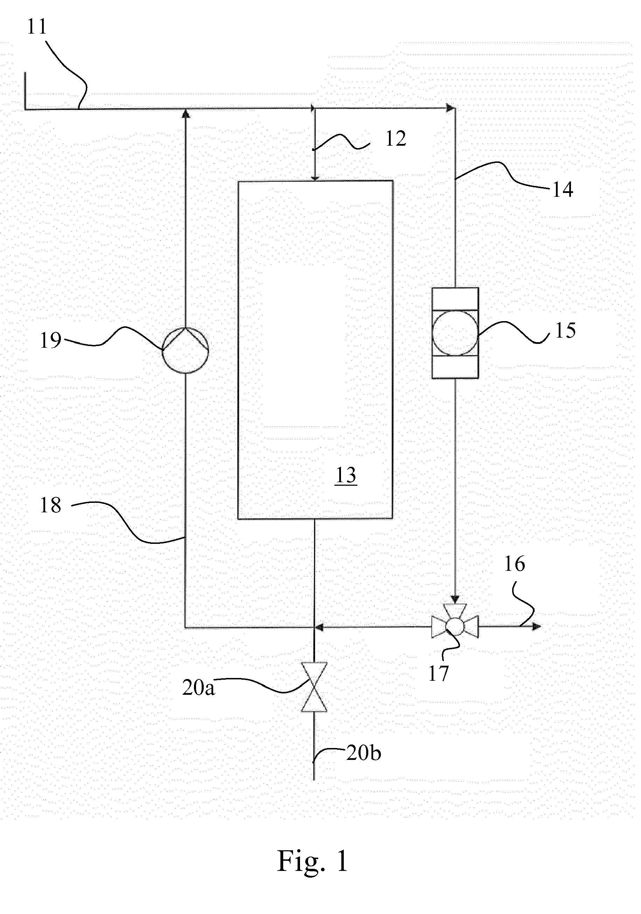

In the following, the embodiments and advantages of the invention are examined in greater detail with reference to the accompanying Figure 1. Figure 1 shows a schematic diagram of the anode side (or cathode side) of a fuel cell, together with the circulation lines.

As described briefly above, the invention relates to a system and method for reducing impurities on the anode or cathode side of a fuel cell. The system comprises the fuel cell's anode or cathode, a fuel or oxidizer feed line for feeding fuel or oxidizer to the anode or cathode, respectively. In addition, in the system, a circulation line is connected to the fuel or oxidizer feed line, to circulate part of the fuel or oxidizer through it and return it to the anode or cathode circulation. According to the invention, at least one filter is arranged in the circulation line, in order to remove impurities in the fuel or oxidizer.

According to one embodiment, the circulation line is fitted in parallel to the fuel cell's anode or cathode, relative to the direction of flow of the fuel or oxidizer, in such a way that part of the fuel or oxidizer can be circulated along the circulation line past the fuel cell's anode or cathode. Figure 1 presents schematically a system diagram of an example of the anode side of a fuel cell, according to this embodiment.

In Figure 1, the following reference numbers are used:
- 11: main hydrogen (oxidizer) feed line
- 12: hydrogen (oxidizer) feed line to the anode (cathode)
- 13: fuel-cell anode (cathode)
- 14: hydrogen (oxidizer) circulation line
- 15: filter
- 16: impurity removal line
- 17: three-way valve
- 18: return circulation line
- 19: circulation pump or ejector
- 20a: discharge valve
- 20b: water and hydrogen mixture (spent oxidizer) removal line

According to Figure 1, the filter 15 is located on the circulation line 14, in such a way that a small part of the hydrogen passes through it. In Figure 1, the filter is in parallel with the anode side 13 of the set of fuel cells, but it can also be located otherwise on the circulation line 14.

The pressure drop of the filter 15 is dimensioned in such a way that a suitable amount of hydrogen will pass through it. The amount is preferably 0.1 - 30 %, most suitably 0.5 - 5 % of the hydrogen. A bypass circulation of this size will ensure not only a sufficient amount of hydrogen being guided to the anode 13, but also a sufficiently continuous removal of impurities.

There can be one or more filters 15 separately and they can be in parallel or in series.

According to one embodiment, filters that cannot be regenerated are used, being instead changed at regular intervals. In these filters, the impurities are bound to the filter more strongly with chemical bonds.

According to a preferred embodiment, the filter 15, or, in the case of several filters, at least one of the filters 15 can be regenerated. In a regenerable filter, the impurities are bonded more weakly, which permits their detaching. Means for regenerating the filter are then also fitted to the circulation line 14. Such means can comprise, for example, the heating of the filter (not shown), or counter-flow washing means, always depending on the type of filter. In addition, means 16, 17 are fitted to the circulation line 14, in order to remove from the anode circulation impurities detaching from the filter during regeneration. At the same time, inert gases such as nitrogen, can be, and typically are removed from the circulation.

In a preferred embodiment, regeneration is performed in such a way that a three-way valve 17 after the filter in the circulation line is turned to flow outwards and impurities are removed from the filter by heating it and passing hydrogen through it. The valve arrangement can also be implemented using normal two-way valves.

The gas used in the regeneration cycle can be hydrogen, but it can also be, for example, a mixture of the fuel and some other gas at any pressure whatever. The other gas can be non-inert, i.e. such that it reacts with impurities collected on the catalyser, thus forming more easily desorbed gases, so that the use of a non-inert gas promotes the cleaning of the catalyser.

According to one embodiment, the regeneration is performed in a underpressure and under heating, in which case the ability of the cleaning gas to desorb poisons from the catalyser's surface can be greater than at atmospheric pressure or when pressurized. The system can correspondingly include a pump, by means of which an underpressure can be created. The underpressure can also be created using the circulation pump 19, in such a way that underpressure is pumped into the system using the three-way valve.

The bypass circulation preferably takes place with the aid of the system pressure, so that the amount of the bypass circulation is arranged with the aid of the filter's properties or separate flow-regulation means in the circulation line. In the return circulation line 18, there is preferably a circulation pump or ejector 19 for returning the hydrogen to the anode's main feed line 11 and then to the anode 13 or to the circulation line 14 for further filtering.

The circulation line can also be in a flow connection with the fuel cell in some other way. According to one embodiment, the circulation line is fitted to the fuel (or oxidizer) return line as a closed circulation line. This means that the circulation line is forked from a certain connection and part of the fuel (or oxidizer) is guided through it and returned filter to essentially the same connection as that from which the circulation line was forked.

When using a circulation line, the amount of the flow of the main line can also be reduced and also a greater part of the flow guided to pass through the filter. This is an advantageous procedure particularly when regenerating. Such a system can also be implemented with the aid of a three-way valve 17. A separate pump is not needed in the system, but can be installed in the circulation line if desired.

The removal of water and hydrogen-nitrogen mixture collected in the circulation can also be implemented normally through a discharge valve 20a.

The filter is preferably arranged to collect at least one of the following impurities: H₂S, SO₂, NOₓ, VOC, but the filter can also remove other impurities. The collection of these particularly in a hydrogen fuel cell substantially reduces the cell's efficiency and consequently its operating life. The invention provides its greatest benefit in applications in which it is created in devices, in which it is wished to minimize the bypass discharge of feed hydrogen and it is also wished for a maximum operating life for the fuel cell (typically at least 10 000 hours). Advantageous applications are vehicles and implements, such as buses, fork-lift trucks, excavators, cranes, etc. intended for professional use and utilizing a fuel cell as a source of energy. However, the invention can be applied in all vehicles, even in passenger cars, in which the source of energy is a fuel cell. In particular, the invention permits the use of hydrogen with a lower degree of cleanliness than previously, which significantly reduces the manufacturing costs of the hydrogen. If fuel-cell vehicles using hydrogen become popular, the system according to the invention can be introduced in all fuel-cell vehicles.

Applied on the cathode side, the system according to the invention for reducing impurities on the cathode side of a fuel cell comprises a cathode, an oxidizer gas (usually air), a feed line for feeding oxidizer to the anode, as well as a circulation line connection to the oxidizer-gas feed line for circulating part of the oxidizer past the fuel-cell's cathode. At least one filter for removing oxidizer impurities is arranged in the oxidizer circulation line according to the invention.

A circulation arrangement that is essentially the same as that on the anode side can be installed on the cathode side, that in a normal state is kept closed. In the regeneration cycle, the cathode-side gas space is filled with a suitable gas (any gas whatever and at any pressure whatever) and the cleaning cycle is performed by circulating the gas, as described above.

The invention can also be applied simultaneously on the anode and cathode sides. In that case, regeneration can also be performed by connecting the anode and cathode sides, when a single filter and pump, which are normally in use on one side, typically the anode side, will be sufficient. This requires a slightly greater maintenance operation, but can, however, be performed relatively easily if the fuel-cell power source is correctly designed. In particular, if a large underpressure or excess pressure is used in cleaning, it is sensible to connect both sides, so that a pressure difference, which can cause damage, is not created over the anode and cathode side.

The embodiments presented above are by way of example and the invention should be interpreted in the full scope of the accompanying Claims.

## Claims

1. System for reducing impurities on an anode or cathode side of a fuel cell, which system comprises
- the anode or cathode (13) of a fuel cell,
- a fuel or oxidizer feed line (11, 12) for feeding fuel or oxidizer to the anode or cathode, respectively,
- a circulation line (14) in flow connection with the anode or cathode, for circulating part of the fuel or oxidizer along the circulation line, and
- at least one filter (15), which is arranged on the said circulation line, for removing impurities of the fuel or oxidizer,
**characterized in that** the circulation line (14) is fitted in parallel with the anode or cathode (13) of the fuel cell, relative to the direction of flow of the fuel or oxidizer, in such a way that part of the fuel or oxidizer can be circulated along the circulation line past the fuel cell's anode or cathode.

2. System according to Claim 1, **characterized in that** the filter (15) can be changed.

3. System according to Claim 1, **characterized in that** the filter (15) can be regenerated and the circulation line (14) comprises means for regenerating the filter.

4. System according to Claim 3, **characterized in that** the means for regenerating the filter (15) comprise means for performing the regeneration in an underpressure.

5. System according to Claim 3 or 4, **characterized in that** the said means for regenerating the filter comprise means for heating the filter (15) and means (16) for removing impurities detaching during the heating and/or inert gases from the circulation line.

6. System according to any of Claims 3 - 5, **characterized in that** the circulation line (14) comprises at least one valve (17), preferably a three-way valve, for removing impurities detaching during the regeneration and/or inert gases from the circulation line.

7. System according to any of Claims 1 - 6, **characterized in that** the circulation line (14) is fitted to the fuel or oxidizer return line (18) as a closed circulation line.

8. System according to any of the above Claims, **characterized in that** 0.1 - 30 %, preferably 0.5 - 5 % of the fuel or oxidizer is arranged to flow through the filter (15) along the circulation line.

9. System according to any of the above Claims, **characterized in that** the fuel cell is a closed-end hydrogen fuel cell.

10. System according to any of the above Claims, **characterized in that** the filter (15) is arranged to collect at least one of the following: di-hydrogen sulphide H₂S, sulphur dioxide SO₂, nitrogen oxides NOₓ, organic hydrocarbons VOC.

11. System according to any of the above Claims, **characterized in that** at least the anode side is equipped with a circulation line (14).

12. System according to Claim 11, **characterized in that** both the anode and the cathode sides are equipped with a circulation line (14).

13. System according to Claim 12, **characterized in that** is comprises common means for regenerating the filters of the anode and cathode sides simultaneously and preferably at a common under- or overpressure.

14. Method for reducing impurities on an anode or cathode side (13) of a fuel cell, comprising feeding fuel or oxidizer to the anode or cathode of the fuel cell, including the steps of:
- circulating part of the fuel or oxidizer along a circulation line (14) which is in flow connection with the anode or cathode (13), and returning to the feed of the anode or cathode,
- filtering out at least part of the impurities of the fuel or oxidizer in the circulation line (14),
**characterized in that** the said circulation line (14) is arranged in such a way that the said part of the fuel is circulated past the anode or cathode along a bypass feed line (14) parallel to the anode or cathode, or along a closed loop (14, 18) in flow connection with the anode or cathode (13).

15. Method according to Claim 14, **characterized by** using for filtering the impurities a regenerable filter (15), which at desired intervals is regenerated, preferably at a raised temperature and/or reduced pressure and the impurities detaching during regeneration are removed from the circulation.

16. Method according to Claim 14 or 15, **characterized by** removing the impurities arising during regeneration through a valve (17) arranged in the circulation line (14).

17. Fuel cell, **characterized in that** it comprises a system according to any of Claims 1 - 13 for reducing impurities on the anode or cathode side (13) of the fuel cell.

18. Vehicle, **characterized in that** it comprises a fuel cell according to Claim 17 as a power source.

## Patentansprüche

1. System zum Verringern von Verunreinigungen an einer Anoden- oder Kathodenseite einer Brennstoffzelle, wobei das System Folgendes umfasst:
- die Anode oder Kathode (13) einer Brennstoffzelle,
- einen Brennstoff- oder Oxidationsmittel-Zulauf (11, 12) zum Zuführen von Brennstoff oder Oxidationsmittel zu der Anode beziehungsweise der Kathode,
- eine Zirkulationsleitung (14) in Fluidverbindung mit der Anode oder Kathode, zum Zirkulieren eines Teils des Brennstoffs oder Oxidationsmittels entlang der Zirkulationsleitung, und
- wenigstens einen Filter (15), an der Zirkulationsleitung angeordnet, zum Entfernen von Verunreinigungen aus dem Brennstoff oder Oxidationsmittel,
**dadurch gekennzeichnet, dass** die Zirkulationsleitung (14), bezogen auf die Strömungsrichtung des Brennstoffs oder Oxidationsmittels, derart parallel zur Anode oder Kathode (13) der Brennstoffzelle angebaut ist, dass ein Teil des Brennstoffs oder Oxidationsmittels entlang der Zirkulationsleitung an der Anode oder Kathode der Brennstoffzelle vorbei zirkuliert werden kann.

2. System nach Anspruch 1, **dadurch gekennzeichnet, dass** der Filter (15) ausgetauscht werden kann.

3. System nach Anspruch 1, **dadurch gekennzeichnet, dass** der Filter (15) regeneriert werden kann und die Zirkulationsleitung (14) Mittel zum Regenerieren des Filters umfasst.

4. System nach Anspruch 3, **dadurch gekennzeichnet, dass** die Mittel zum Regenerieren des Filters (15) Mittel zum Durchführen der Regenerierung in einem Unterdruck umfassen.

5. System nach Anspruch 3 oder 4, **dadurch gekennzeichnet, dass** die Mittel zum Regenerieren des Filters Mittel zum Erwärmen des Filters (15) und Mittel (16) zum Entfernen von Verunreinigungen, die sich beim Erwärmen lösen, und / oder von Inertgasen aus der Zirkulationsleitung umfassen.

6. System nach einem der Ansprüche 3-5, **dadurch gekennzeichnet, dass** die Zirkulationsleitung (14) wenigstens ein Ventil (17), vorzugsweise ein Dreiwegeventil, zum Entfernen von Verunreinigungen, die sich beim Erwärmen lösen, und / oder von Inertgasen aus der Zirkulationsleitung, umfasst.

7. System nach einem der Ansprüche 1-6, **dadurch gekennzeichnet, dass** die Zirkulationsleitung (14) als geschlossene Zirkulationsleitung an die Brennstoff- oder Oxidationsmittelrücklaufleitung (18) angebaut ist.

8. System nach einem der vorhergehenden Ansprüche, **dadurch gekennzeichnet, dass** 0,1-30 %, vorzugsweise 0,5-5 % des Brennstoffs oder Oxidationsmittels angeordnet sind, entlang der Zirkulationsleitung durch den Filter (15) zu strömen.

9. System nach einem der vorhergehenden Ansprüche, **dadurch gekennzeichnet, dass** die Brennstoffzelle eine Wasserstoff-Brennstoffzelle mit geschlossenem Ende ist.

10. System nach einem der vorhergehenden Ansprüche, **dadurch gekennzeichnet, dass** der Filter (15) angeordnet ist, wenigstens eines der Folgenden zu sammeln: Dihydrogensulfid (H₂S), Schwefeldioxid (SO₂), Stickoxide (NOₓ), organische Kohlenwasserstoffe (VOC).

11. System nach einem der vorhergehenden Ansprüche, **dadurch gekennzeichnet, dass** wenigstens die Anodenseite mit einer Zirkulationsleitung (14) versehen ist.

12. System nach Anspruch 11, **dadurch gekennzeichnet, dass** sowohl die Anoden- als auch die Kathodenseite mit einer Zirkulationsleitung (14) versehen ist.

13. System nach Anspruch 12, **dadurch gekennzeichnet, dass** es gemeinsame Mittel zum gleichzeitigen Regenerieren der Filter auf der Anoden- und auf der Kathodenseite, vorzugsweise bei einem einheitlichen Unter- oder Überdruck, umfasst.

14. Verfahren zum Verringern von Verunreinigungen auf einer Anoden- oder Kathodenseite (13) einer Brennstoffzelle, umfassend das Zuführen von Brennstoff oder Oxidationsmittel zur Anode oder Kathode der Brennstoffzelle, die folgenden Schritte umfassend:
- Zirkulieren eines Teils des Brennstoffs oder Oxidationsmittels entlang einer Zirkulationsleitung (14), in Fluidverbindung mit der Anode oder Kathode (13), und Rückführen in den Zulauf der Anode oder Kathode,
- Herausfiltern von wenigstens einem Teil der Verunreinigungen im Brennstoff oder Oxidationsmittel in der Zirkulationsleitung (14),
**dadurch gekennzeichnet, dass** die Zirkulationsleitung (14) derart angeordnet ist, dass der Teil des Brennstoffs entlang eines zur Anode oder Kathode parallelen Bypasszulaufs (14) oder entlang eines geschlossenen Kreislaufs (14, 18), in Fluidverbindung mit der Anode oder Kathode (13), an der Anode oder Kathode vorbei zirkuliert wird.

15. Verfahren nach Anspruch 14, **gekennzeichnet durch** das Verwenden eines regenerierbaren Filters (15) zum Filtern der Verunreinigungen, der in gewünschten Abständen, vorzugsweise bei einer erhöhten Temperatur und / oder bei verringertem Druck regeneriert wird, wobei die Verunreinigungen, die sich beim Erwärmen lösen, aus der Zirkulationsleitung entfernt werden.

16. Verfahren nach Anspruch 14 oder 15, **dadurch gekennzeichnet, dass** die bei der Regenerierung aufkommenden Verunreinigungen durch ein in der Zirkulationsleitung (14) angeordnetes Ventil (17) entfernt werden.

17. Brennstoffzelle, **dadurch gekennzeichnet, dass** sie ein System nach einem der Ansprüche 1 bis 13 zum Verringern von Verunreinigungen auf der Anoden- oder Kathodenseite (13) der Brennstoffzelle umfasst.

18. Fahrzeug, **dadurch gekennzeichnet, dass** es eine Brennstoffzelle nach Anspruch 17 als Energiequelle aufweist.

## Revendications

1. Système de réduction des impuretés sur un côté anodique ou cathodique d'une pile à combustible, ledit système comprenant :
- l'anode ou la cathode (13) d'une pile à combustible,
- une ligne d'alimentation en combustible ou en oxydant (11, 12) pour acheminer du combustible ou un oxydant à l'anode ou à la cathode, respectivement,
- une ligne de circulation (14) en communication fluidique avec l'anode ou la cathode pour faire circuler une partie du combustible ou de l'oxydant le long de la ligne de circulation et
- au moins un filtre (15) qui est aménagé sur ladite ligne de circulation pour éliminer les impuretés du combustible ou de l'oxydant,
**caractérisé en ce que** la ligne de circulation (14) est ajustée en parallèle avec l'anode ou la cathode (13) de la pile à combustible par rapport au sens d'écoulement du combustible ou de l'oxydant de manière qu'une partie du combustible ou de l'oxydant puisse être mise en circulation le long de la ligne de circulation au-delà de l'anode ou de la cathode de la pile à combustible.

2. Système selon la revendication 1, **caractérisé en ce que** le filtre (15) peut être changé.

3. Système selon la revendication 1, **caractérisé en ce que** le filtre (15) peut être régénéré et la ligne de circulation (14) comprend des moyens permettant de régénérer le filtre.

4. Système selon la revendication 3, **caractérisé en ce que** les moyens permettant de régénérer le filtre (15) comprennent des moyens pour effectuer la régénération sous dépression.

5. Système selon la revendication 3 ou la revendication 4, **caractérisé en ce que** lesdits moyens permettant de régénérer le filtre comprennent des moyens pour chauffer le filtre (15) et des moyens (16) pour éliminer les impuretés qui se détachent au cours du chauffage et/ou les gaz inertes de la ligne de circulation.

6. Système selon l'une quelconque des revendications 3 à 5, **caractérisé en ce que** la ligne de circulation (14) comprend au moins une soupape (17), de préférence une soupape à trois voies, pour éliminer les impuretés qui se détachent au cours de la génération et/ou les gaz inertes de la ligne de circulation.

7. Système selon l'une quelconque des revendications 1 à 6, **caractérisé en ce que** la ligne de circulation (14) est ajustée à la ligne de retour de combustible ou d'oxydant (18) sous la forme d'une ligne de circulation fermée.

8. Système selon l'une quelconque des revendications précédentes, **caractérisé en ce qu'**une quantité de 0,1 à 30 %, de préférence de 0,5 à 5 % du combustible ou de l'oxydant est ménagée pour s'écouler à travers le filtre (15) le long de la ligne de circulation.

9. Système selon l'une quelconque des revendications précédentes, **caractérisé en ce que** la pile à combustible est une pile à combustible hydrogène à extrémité fermée.

10. Système selon l'une quelconque des revendications précédentes, **caractérisé en ce que** le filtre (15) est aménagé pour recueillir au moins l'un ou l'autre des déchets suivants : sulfure de dihydrogène H₂S, dioxyde de soufre SO₂, oxydes d'azote NOₓ et hydrocarbures organiques VOC.

11. Système selon l'une quelconque des revendications précédentes, **caractérisé en ce qu'**au moins le côté anodique est équipé d'une ligne de circulation (14).

12. Système selon la revendication 11, **caractérisé en ce que** les côtés anodique et cathodique sont tous deux équipés d'une ligne de circulation (14).

13. Système selon la revendication 12, **caractérisé en ce qu'**il comprend des moyens communs pour régénérer les filtres des côtés anodique et cathodique simultanément et de préférence sous dépression ou surpression commune.

14. Procédé de réduction des impuretés sur un côté anodique ou cathodique (13) d'une pile à combustible, comprenant l'acheminement de combustible ou d'oxydant à l'anode ou à la cathode de la pile à combustible, comprenant les étapes consistant à :
- faire circuler une partie du combustible ou de l'oxydant le long d'une ligne de circulation (14) qui est en communication fluidique avec l'anode ou la cathode (13) et la renvoyer à l'alimentation de l'anode ou de la cathode,
- séparer par filtration au moins une partie des impuretés du carburant ou de l'oxydant dans la ligne de circulation (14),
**caractérisé en ce que** ladite ligne de circulation (14) est aménagée de manière que ladite partie du combustible soit mise en circulation au-delà de l'anode ou de la cathode le long d'une ligne d'alimentation à dérivation (14) parallèlement à l'anode ou à la cathode ou le long d'une boucle fermée (14, 18) en communication fluidique avec l'anode ou la cathode (13).

15. Procédé selon la revendication 14, **caractérisé par** l'utilisation pour le filtrage des impuretés d'un filtre régénérable (15) qui, à intervalles souhaités, est régénéré, de préférence à température élevée et/ou sous pression réduite et les impuretés qui se détachent au cours de la régénération sont éliminées de la circulation.

16. Procédé selon la revendication 14 ou la revendication 15, **caractérisé par** l'élimination des impuretés qui se dégagent au cours de la régénération à travers une soupape (17) aménagée dans la ligne de circulation (14).

17. Pile à combustible **caractérisée en ce qu'**elle comprend un système selon l'une quelconque des revendications 1 à 13 pour réduire les impuretés du côté anodique ou cathodique (13) de la pile à combustible.

18. Véhicule, **caractérisé en ce qu'**il comprend une pile à combustible selon la revendication 17 comme source d'alimentation.
